# EUROPÄISCHE PATENTSCHRIFT

(11) **EP 4 357 120 B1**
(45) Veröffentlichungstag und Bekanntmachung des Hinweises auf die Patenterteilung: **18.06.2025**
(21) Anmeldenummer: 23201948.9
(22) Anmeldetag: 05.10.2023
(51) Int. Cl.: B29D 30/30, B29D 30/00

(54) **VERFAHREN ZUM ÜBERWACHEN EINER MASCHINE**
METHOD FOR MONITORING A MACHINE
PROCÉDÉ DE SURVEILLANCE D'UNE MACHINE

(30) Priorität: 19.10.2022 DE 102022211057
(43) Veröffentlichungstag der Anmeldung: 24.04.2024
(73) Patentinhaber: Continental Reifen Deutschland GmbH, 30175 Hannover (DE)
(72) Erfinder: Greupner, Bernd, 30165 Hannover (DE); Koch, Tim, 30165 Hannover (DE)
(74) Vertreter: Continental Corporation

(56) Entgegenhaltungen:
- EP-A1- 3 356 128
- EP-B1- 3 356 128
- DE-A1- 102019 217 712
- JP-A- H07 232 382

## Beschreibung

Die Erfindung betrifft ein Verfahren zum Überwachen einer Maschine,
wobei ein Übergabeschritt eines ersten Vorprodukts von einem ersten Maschinenteil zu einem zweiten Maschinenteil und beziehungsweise oder ein Anrollvorgang des ersten Vorprodukts durchgeführt wird. Weiterhin betrifft die Erfindung ein Computerprogrammprodukt.

Diskontinuierlich arbeitende Maschinen in der Fertigung, wie beispielweise Reifenbaumaschinen, werden hinsichtlich ihrer geometrischen Eigenschaften manuell oder aber mit optischen Sensoren, die jeweils die Geometrie einzelner Komponenten überwachen, überwacht. Dies erfordert einen hohen personellen Einsatz oder aber eine Vielzahl an optischen Sensoren, die die Geometrien der einzelnen Komponenten erfassen. Ein Umrüsten der Maschinen macht ein erneutes Einrichten der optischen Sensoren notwendig.

Von kontinuierlich laufenden Maschinen ist bekannt, dass, von beispielweise Kugellagern, die Beschleunigungen ermittelt werde, wobei eine Änderung des Schwingungsprofils erkannt wird. Das Patentdokument DE 10 2019 217712 A1 offenbart ein Verfahren zur Vermessung einer offenen oder einer überlappenden Verbindungsstelle einer Materiallage bei der Fertigung eines Reifenrohlings in einer Reifenaufbaumaschine.

Vor diesem Hintergrund liegt der Erfindung die Aufgabe zugrunde, ein Verfahren zum Überwachen einer Maschine derart auszuführen, dass eine Maschine bei einem Übergabeschritt eines ersten Vorprodukts von einem ersten Maschinenteil zu einem zweiten Maschinenteil und beziehungsweise oder bei einem Anrollvorgang des ersten Vorprodukts kosteneffizient, mit hoher Häufigkeit und zuverlässig durchzuführen.

Diese Aufgabe wird gelöst mit einem Verfahren gemäß den Merkmalen des Patentanspruches 1 sowie einem Computerprogrammprodukt gemäß dem nebengeordneten Anspruch. Die Unteransprüche betreffen besonders zweckmäßige Weiterbildungen der Erfindung.

Erfindungsgemäß ist also ein Verfahren zum Überwachen einer Maschine vorgesehen, wobei ein Übergabeschritt eines ersten Vorprodukts von einem ersten Maschinenteil zu einem zweiten Maschinenteil und beziehungsweise oder ein Anrollvorgang des ersten Vorprodukts durchgeführt wird, wobei die Beschleunigungsmesswerte oder auf Basis von diesen abgeleitete Kennzahlen einer Komponente der kautschukverarbeitenden Maschine bestimmt werden, wobei die Beschleunigungsmesswerte mit einem Referenzwert verglichen werden, wobei beim Überschreiten einer Differenz zwischen den Beschleunigungsmesswerten oder den abgeleiteten Kennzahlen und dem zumindest einem Referenzwert ein Signal ausgegeben wird.

Ein Anrollvorgang ist ein Verfahrensschritt, bei dem ein Vorprodukt an eine Komponente oder ein weiteres Vorprodukt angedrückt wird, indem ein rotationssymmetrisches Werkzeug auf dem Vorprodukt abrollt.

Erfindungsgemäß wird mit dem Verfahren erreicht, dass bei einem diskontinuierlichen Verfahren anhand von Beschleunigungswerten einer Komponente einer Maschine ein Fertigungsschritt erkannt werden kann, der zu einem fehlerhaften Produkt führt, wobei beim Erkennen eines derartigen Verfahrensschritts ein Signal ausgegeben wird, so dass Maßnahmen zum Anpassen des Fehlers verursachenden Verfahrenschritts vorgenommen werden können. Es wurde erkannt, dass nicht nur bei kontinuierlich laufenden Verfahren, die ein kontinuierliches Schwingungsprofil aufweisen eine Änderung des Schwingungsprofils auf eine fehlerbehaftete Komponente hinweisen, sondern dass ein diskontinuierliches Schwingungsprofil eines diskontinuierlichen Verfahrens ebenfalls zum Überwachen einer Maschine verwendet werden kann.

Eine bevorzugte Ausführungsform sieht vor, dass der Beschleunigungsmesswert Informationen über die Frequenz und beziehungsweise oder die Amplitude einzelner Beschleunigungen sowie bevorzugt über das zeitliche Verhalten, also dem zeitlichen Verlauf, einzelner Beschleunigungen aufweist. Die Frequenzen beziehungsweise bei einer Schwingung, die Dauer der Schwingung sowie die Amplitude beziehungsweise die Größe der Beschleunigung haben sich zum Ermitteln eines fehlerbehafteten Verfahrensschrittes als besonders geeignet erwiesen. Hierbei hat sich gezeigt, dass insbesondere das zeitliche Verhältnis zwischen einzelnen Beschleunigungen beziehungsweise einzelnen Beschleunigungsmesswerte besonders geeignet ist Verfahrensschritte zu detektieren, die zu fehlerhaften Produkt führen.

Eine weitere bevorzugte Ausführungsform sieht vor, dass das Verfahren einen Startzeitpunkt hat, wobei der Startzeitpunkt durch einen Prozessschritt des überwachten Prozesses gesetzt werden kann und beziehungsweise oder durch das Überschreiten eines Schwell-Beschleunigungswertes, wobei der Verfahrenszyklus bevorzugt nach weniger als 5 Sekunden, weiter bevorzugt nach weniger als 1 Sekunde und am meisten bevorzugt nach weniger als 0,2 Sekunden beendet wird. Es hat sich gezeigt, dass ein möglichst kurzer Verfahrenszyklus zu einer zuverlässigeren Erkennung eines fehlerbehafteten Verfahrensschritts führt. Hierbei hat es sich als vorteilhaft herausgestellt, den Startzeitpunkt durch ein bestimmtes Ereignis zu setzen, da hierdurch die Messwerte, die zu einem Zeitpunkt des Verfahrens, also einem bestimmten Verfahrensteilschritt, aufgenommen werden in einfacher Form miteinander verglichen werden können. Eine besonders zuverlässige Erkennung eines fehlerhaften Verfahrensschritts wird erreicht.

Eine weitere bevorzugte Ausführungsform sieht vor, dass die Differenz zwischen Beschleunigungsmesswerten und beziehungsweise oder davon abgeleiteten Kennzahlen und zumindest einem Referenzwert hinsichtlich der Frequenz und beziehungsweise oder der Amplitude und beziehungsweise oder der Zeitspanne, die seit dem Startzeitpunkt vergangen ist, gebildet wird.

Die Differenz zwischen dem Beschleunigungsmesswert und dem Referenzwert hinsichtlich ihrer Frequenz oder Dauer sowie ihre Amplitude oder Größe und des Zeitpunktes ihres Auftretens während des Verfahrenszykluses haben sich als besonders geeignete erwiesen, um ein fehlerbehafteten Verfahrensschritt zu detektieren.

Eine weitere bevorzugte Ausführungsform sieht vor, dass der Referenzwert durch Referenzprozesse ermittelt wird. Es hat sich gezeigt, dass Referenzwerte, die durch Referenzprozesse generiert worden sind, besonders zuverlässig fehlerbehaftete Verfahrensschritte erkennbar macht, wobei fehlerfreie Verfahrensschritte besonders zuverlässig als solche erkannt werden. Hierbei werden unter Referenzprozessen Verfahrensdurchführungen verstanden die Referenzwerte erzeugen, die von fehlerfreien sowie gezielt fehlerbehafteten Verfahren generiert wurden und manuell als fehlerbehaftet oder fehlerfrei eingruppiert werden.

Eine weitere bevorzugte Ausführungsform sieht vor, dass der Referenzwert aus einer Mehrzahl von Fertigungsprozessen erzeugt wird, wobei die Erzeugung des Referenzwerts bevorzugt unter Verwendung von künstlicher Intelligenz, maschinellen Lernen und beziehungsweise oder neuronaler Netzwerke erzeugt wird. Das Erzeugen von Referenzwerten aus einer Mehrzahl von Fertigungsprozessen ist vorteilhaft, da ein besonders geringer personeller Aufwand zum Anlernen des Verfahrens notwendig ist, da das Verfahren Beschleunigungen einer Vielzahl von Fertigungsprozessen auswertet und selbstständig Schwellen für fehlerbehaftete und fehlerfreie Verfahren generiert. Besonders vorteilhaft hat sich die Nutzung von künstlicher Intelligenz, maschinellen Lernen und beziehungsweise oder neuronaler Netzwerke herausgestellt.

Eine weitere bevorzugte Ausführungsform sieht vor, dass ein Vergleichen der Beschleunigungsmesswerte oder abgeleiteter Kennzahlen mit dem zumindest einem Referenzwert zu mehr als zwei unterschiedlichen Signalausgaben führen kann, insbesondere zu einem Signal, dass die Beschleunigungsmesswerte und beziehungsweise oder abgeleitete Kennzahlen im Soll sind und beziehungsweise oder dass die Beschleunigungsmesswerte und beziehungsweise oder abgeleitete Kennzahlen im Soll sind und sich hinsichtlich ihrer Größen in der Nähe eines nicht Soll-Bereichs befinden und beziehungsweise oder dass die Beschleunigungsmesswerte und beziehungsweise oder abgeleitete Kennzahlen sich in einem bestimmten von mehreren nicht Soll-Bereichen befinden. Es hat sich als vorteilhaft erwiesen mehr als zwei unterschiedliche Signalausgaben zu ermöglichen, da dadurch beispielsweise bereits ein Hinweis auf eine mögliche Fehlerursache durch das Signal ausgegeben werden kann.

Eine weitere bevorzugte Ausführungsform sieht vor, dass die Maschine zur Herstellung von Kautschukvorprodukten oder Kautschukprodukten, insbesondere zum Aufbauen von Reifen, ausgelegt ist. Bei Maschinen zur Herstellung von Kautschukvorprodukten oder Kautschukprodukten, insbesondere bei Reifenbaumaschinen, findet eine Vielzahl von Übergabeschritten und Anrollvorgängen statt, sodass bei diesen Maschinen das Verfahren besonders vorteilhaft ist.

Erfindungsgemäß ist ein Computerprogrammprodukt zum Ermitteln eines Beschleunigungsmesswerts einer Maschine vorgesehen, das Befehle umfasst, die bei der Ausführung des Programms durch zumindest eine Prozessoreinheit diese veranlasst das erfindungsgemäße Verfahren auszuführen.

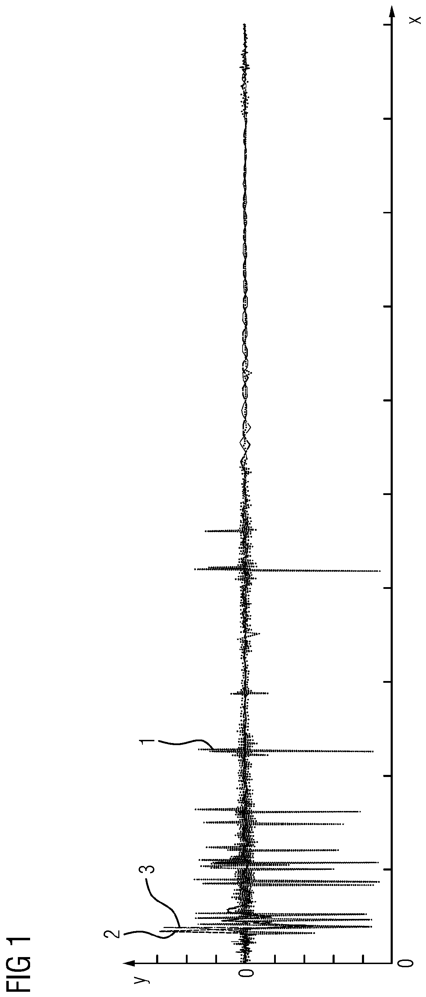

Die Erfindung lässt zahlreiche Ausführungsformen zu. Zur weiteren Verdeutlichung ihres Grundprinzips sind zum Verfahren gehörige Messkurven in der Zeichnung dargestellt und werden nachfolgend beschrieben. Diese zeigt in
Fig. 1 Kurven von Beschleunigungen über die Zeit von Maschinenteilen.

Figur 1 zeigt Kurven von Beschleunigungen über die Zeit von Maschinenteilen, wobei die gepunktete Linie 1 einen Beschleunigungsverlauf eines Übergabeschritts eines Vorprodukts darstellt. Der Verlauf beginnt mit kleinen positiven Beschleunigungswerten, die auf der y-Achse nach oben aufgetragen sind, sowie kleinen negativen Beschleunigungswerten. Folgend, mit ansteigenden Werten der x-Achse, sind mittlere positive sowie größere negative Beschleunigungswerte, die sich in schneller Abfolge abwechseln und einen ersten Abschnitt mit größeren Beschleunigungswerten ausbilden, dargestellt. Die mittleren und größeren Beschleunigungswerte werden nur über einen sehr kurzen Zeitraum erreicht. Die Beschleunigungen bilden Peaks aus. Im weiteren Verlauf sind Abschnitte mit geringen Beschleunigungen, die sich mit Abschnitten mit größeren Beschleunigungswerten abwechseln dargestellt. In der zweiten Hälfte des Verlaufs sind lediglich kleinere Beschleunigungen dargestellt. Der Beschleunigungsverlauf der gepunkteten Linie 1 wurde beim Übergeben eines Vorprodukts beim Fertigen eines Gutteils ermittelt.

Die gestrichelte Linie 2 sowie die gestrichpunktete Linie 3 stellen zwei weitere Beschleunigungsverläufe von Maschinenteilen dar, wobei die Beschleunigungen beim Übergeben eines Vorprodukts beim Fertigen von Ausschuss ermittelt wurden. Die Beschleunigungsverläufe beginnen mit geringen Werten und erreichen dann große positive Werte sowie mittlere negative Werte, die über relativ kurze Zeiträume vorliegen. Im weiteren Verlauf sind nur noch kleinere Werte ermittelt worden, die abschnittsweise eine periodische Abfolge aufweisen.

## Patentansprüche

1. Verfahren zum Überwachen einer Maschine,
wobei ein Übergabeschritt eines ersten Vorprodukts von einem ersten Maschinenteil zu einem zweiten Maschinenteil und/oder ein Anrollvorgang des ersten Vorprodukts durchgeführt wird,
**dadurch gekennzeichnet, dass**
Beschleunigungsmesswerte einer Komponente der kautschukverarbeitenden Maschine bestimmt werden, wobei die Beschleunigungsmesswerte oder auf Basis von diesen abgeleitete Kennzahlen mit zumindest einem Referenzwert verglichen werden, wobei beim Überschreiten einer Differenz zwischen den Beschleunigungsmesswerten oder den abgeleiteten Kennzahlen und dem zumindest einen Referenzwert ein Signal ausgegeben wird.

2. Verfahren nach Anspruch 1, **dadurch gekennzeichnet, dass** der Beschleunigungsmesswert Informationen über die Frequenz und/oder die Amplitude einzelner Beschleunigungen sowie bevorzugt über das zeitliche Verhalten einzelner Beschleunigungen aufweist.

3. Verfahren nach den Ansprüchen 1 oder 2, **dadurch gekennzeichnet, dass** das Verfahren einen Startzeitpunkt hat, wobei der Startzeitpunkt durch einen Prozessschritt des überwachten Prozesses gesetzt werden kann und/oder durch das Überschreiten eines Schwell-Beschleunigungswertes, wobei der Verfahrenszyklus bevorzugt nach weniger als 5 Sekunden, weiter bevorzugt nach weniger als 1 Sekunde und am meisten bevorzugt nach weniger als 0,2 Sekunden beendet wird.

4. Verfahren nach einem der vorangehenden Ansprüche, **dadurch gekennzeichnet, dass** die Differenz zwischen Beschleunigungsmesswerten oder davon abgeleiteten Kennzahlen und zumindest einem Referenzwert hinsichtlich der Frequenz und/oder der Amplitude und/oder der Zeitspanne, die seit dem Startzeitpunkt vergangen ist, gebildet wird.

5. Verfahren nach einem der vorangehenden Ansprüche, **dadurch gekennzeichnet, dass** der Referenzwert durch Referenzprozesse ermittelt wird.

6. Verfahren nach einem der vorangehenden Ansprüche, **dadurch gekennzeichnet, dass** der Referenzwert aus einer Mehrzahl von Fertigungsprozessen erzeugt wird, wobei die Erzeugung des Referenzwerts bevorzugt unter Verwendung von künstlicher Intelligenz, maschinellen Lernen und/oder neuronaler Netzwerke erzeugt wird.

7. Verfahren nach einem der vorangehenden Ansprüche, **dadurch gekennzeichnet, dass** ein Vergleichen der Beschleunigungsmesswerte oder abgeleiteter Kennzahlen mit dem zumindest einen Referenzwert zu mehr als zwei unterschiedlichen Signalausgaben führen kann, insbesondere zu einem Signal, dass die Beschleunigungsmesswerte und/oder Kennzahlen im Soll sind und/oder dass die Beschleunigungsmesswerte und/oder Kennzahlen im Soll sind und sich hinsichtlich ihrer Größen in der Nähe eines nicht Soll-Bereichs befinden und/oder dass die Beschleunigungsmesswerte und/oder Kennzahlen sich in einem bestimmten von mehreren nicht Soll-Bereichen befinden.

8. Verfahren nach einem der vorangehenden Ansprüche, **dadurch gekennzeichnet, dass** die Maschine zur Herstellung von Kautschukvorprodukten oder Kautschukprodukten, insbesondere zum Aufbauen von Reifen, ausgelegt ist.

9. Computerprogrammprodukt zum Ermitteln eines Beschleunigungsmesswerts einer Maschine, umfassend Befehle, die bei der Ausführung des Programms durch zumindest eine Prozessoreinheit diese veranlasst das Verfahren nach einem der Ansprüche 1 bis 8 auszuführen.

## Claims

1. Method for monitoring a machine,
wherein a step of transferring a first preliminary product from a first machine part to a second machine part and/or an operation of rolling on the first preliminary product is performed,
**characterized in that**
measured acceleration values of a component of the rubber-processing machine are determined, wherein the measured acceleration values or characteristic values derived on the basis of these are compared with at least one reference value, with a signal being output if a difference between the measured acceleration values or the derived characteristic values and the at least one reference value is exceeded.

2. Method according to Claim 1, **characterized in that** the measured acceleration value comprises information about the frequency and/or the amplitude of individual accelerations and preferably about the temporal behaviour of individual accelerations.

3. Method according to either of Claims 1 and 2, **characterized in that** the method has a starting point in time, wherein the starting point in time can be set by a process step of the monitored process and/or by the exceeding of a threshold acceleration value, with the method cycle preferably being ended after less than 5 seconds, more preferably after less than 1 second and most preferably after less than 0.2 seconds.

4. Method according to one of the preceding claims, **characterized in that** the difference between measured acceleration values or characteristic values derived therefrom and at least one reference value with regard to the frequency and/or the amplitude and/or the period of time that has elapsed since the starting point in time is formed.

5. Method according to one of the preceding claims, **characterized in that** the reference value is ascertained by reference processes.

6. Method according to one of the preceding claims, **characterized in that** the reference value is generated from a plurality of production processes, wherein the generation of the reference value is preferably generated by using artificial intelligence, machine learning and/or neural networks.

7. Method according to one of the preceding claims, **characterized in that** a comparison of the measured acceleration values or derived characteristic values with the at least one reference value can lead to more than two different signal outputs, in particular in relation to one signal, **in that** the measured acceleration values and/or the characteristic values are on target and/or **in that** the measured acceleration values and/or the characteristic values are on target and in terms of their magnitudes are in the vicinity of a non-target range and/or **in that** the measured acceleration values and/or the characteristic values are in a specific one of a number of non-target ranges.

8. Method according to one of the preceding claims, **characterized in that** the machine is designed for producing preliminary rubber products or rubber products, in particular for building tyres.

9. Computer program product for ascertaining a measured acceleration value of a machine, comprising commands which, when the program is executed by at least one processor unit, causes it to perform the method according to one of Claims 1 to 8.

## Revendications

1. Procédé de surveillance d'une machine,
une étape de transfert d'un premier produit précurseur d'une première partie de machine à une deuxième partie de machine et/ou une opération de roulage du premier produit précurseur étant effectuée,
**caractérisé en ce que**
des valeurs de mesure d'accélération d'un composant de la machine de traitement de caoutchouc sont déterminées, les valeurs de mesure d'accélération ou des indices dérivés sur la base de celles-ci étant comparés à au moins une valeur de référence, un signal étant émis en cas de dépassement d'une différence entre les valeurs de mesure d'accélération ou les indices dérivés et l'au moins une valeur de référence.

2. Procédé selon la revendication 1, **caractérisé en ce que** la valeur de mesure d'accélération présente des informations sur la fréquence et/ou l'amplitude d'accélérations individuelles ainsi que, de préférence, sur le comportement temporel d'accélérations individuelles.

3. Procédé selon les revendications 1 ou 2, **caractérisé en ce que** le procédé a un instant de démarrage, l'instant de démarrage pouvant être fixé par une étape de processus du processus surveillé et/ou par le dépassement d'une valeur d'accélération de seuil, le cycle de procédé étant terminé de préférence après moins de 5 secondes, de manière davantage préférée après moins de 1 seconde et de manière préférée entre toutes après moins de 0,2 seconde.

4. Procédé selon l'une quelconque des revendications précédentes, **caractérisé en ce que** la différence entre des valeurs de mesure d'accélération ou des indices qui en sont dérivés et au moins une valeur de référence est formée en ce qui concerne la fréquence et/ou l'amplitude et/ou la durée écoulée depuis l'instant de démarrage.

5. Procédé selon l'une quelconque des revendications précédentes, **caractérisé en ce que** la valeur de référence est déterminée par des processus de référence.

6. Procédé selon l'une quelconque des revendications précédentes, **caractérisé en ce que** la valeur de référence est générée à partir d'une pluralité de processus de fabrication, la génération de la valeur de référence étant de préférence générée en utilisant l'intelligence artificielle, l'apprentissage automatique et/ou les réseaux neuronaux.

7. Procédé selon l'une quelconque des revendications précédentes, **caractérisé en ce qu'**une comparaison des valeurs de mesure d'accélération ou des indices dérivés avec l'au moins une valeur de référence peut conduire à plus de deux sorties de signal différentes, notamment à un signal indiquant que les valeurs de mesure d'accélération et/ou les indices sont dans la cible et/ou que les valeurs de mesure d'accélération et/ou les indices sont dans la cible et se trouvent, en ce qui concerne leurs grandeurs, à proximité d'une plage non cible et/ou que les valeurs de mesure d'accélération et/ou les indices se trouvent dans une plage déterminée parmi plusieurs plages non cibles.

8. Procédé selon l'une quelconque des revendications précédentes, **caractérisé en ce que** la machine est conçue pour préparer des produits précurseurs de caoutchouc ou des produits de caoutchouc, notamment pour la confection de pneumatiques.

9. Produit de programme informatique pour déterminer une valeur de mesure d'accélération d'une machine, comprenant des instructions qui, lorsque le programme est exécuté par au moins une unité de traitement, amènent celle-ci à exécuter le procédé selon l'une quelconque des revendications 1 à 8.
